# EUROPÄISCHE PATENTSCHRIFT

(11) **EP 1 491 418 B1**
(45) Veröffentlichungstag und Bekanntmachung des Hinweises auf die Patenterteilung: **28.11.2007**
(21) Anmeldenummer: 04012138.6
(22) Anmeldetag: 21.05.2004
(51) Int. Cl.: B61D 17/04, B62D 29/00, B32B 5/18

(54) **Bodengruppe eines Wagenkastens, insbesondere für Schienenfahrzeuge**
Floor of a carbody, especially for a railway vehicle.
Plancher d'une caisse, notamment de véhicule ferroviaire.

(30) Priorität: 27.06.2003 DE 10329083
(43) Veröffentlichungstag der Anmeldung: 29.12.2004
(73) Patentinhaber: SIEMENS AKTIENGESELLSCHAFT, 80333 München (DE)
(72) Erfinder: Geyer, Karl-Eberhard, Dr., 40591 Düsseldorf (DE); Winkelmann, Ralf, Prof., 02979 Burg (DE)

(56) Entgegenhaltungen:
- WO-A-02/058926
- DE-A- 19 813 092
- DE-C- 19 501 659

## Beschreibung

Die Erfindung betrifft die Bodengruppe eines Wagenkastens, insbesondere für Schienenfahrzeuge, mit zumindest einer Bodenplatte und einem für Radkästen vorgesehenen Bereich wobei die Bodenplatte aus einer einteiligen plattierten Metallschaum-Verbundstruktur gebildet ist.

Durch die DE 196 18 637 A1 und speziell durch die Zeitschrift "Der Nahverkehr", Nr. 6/96, Seite 50, ist ein als zweiachsiges Fahrwerkmodul ausgeführter Wagenkasten eines niederflurigen Straßenbahnfahrzeuges bekannt. Bei diesem Wagenkasten besteht die Bodengruppe im wesentlichen aus einer mittigen, horizontal verlaufenden Bodenplatte mit seitlichen, rampenförmigen Abschnitten, zwei Endquerträgern, aus Blechen hergestellten Radkästen sowie seitlichen Brüstungsträgern als Ersatz für bei anderen Bauweisen übliche durchgehende Langträger. Die vorgenannten Bauelemente sind durch Schweißen miteinander verbunden. Bei derartigen Schweißkonstruktionen treten unabhängig davon, ob sie aus Aluminium oder Stahl erstellt sind, durch Schweißwärme und Schrumpfung relativ hohe Verformungen (Schweißverzug) auf, deren Ausgleich durch nachträgliches Richten einen beträchtlichen Aufwand verursacht. Besonders bei Schweißkonstruktionen aus Aluminium müssen Festigkeitsverluste im Bereich der Schweißnähte berücksichtigt werden, entweder durch Reduzieren der zulässigen Spannungen oder durch Vergrößern der Wanddicken mit der Folge eines Gewichtsanstieges. Im Hinblick auf Schweißkonstruktionen aus Stahl wird speziell als nachteilig angesehen, daß wegen einer kaum möglichen Funktionsintegration viele Anschweißteile und Anschraubteile eingesetzt werden müssen (große Anzahl und Vielfalt von Teilen) und außerdem der Korrosionsschutz unter anderem aufgrund von Materialdoppelungen aufwendig ist. Zusammenfassend betrachtet sind als Schweißkonstruktion ausgeführte Wagenkästen sehr kostenintensiv.

Durch die Druckschrift DE 198 13 092 A1 ist es bekannt, ein Strukturelement aus Stahlblech, insbesondere einen rohrförmigen Fahrzeugträger oder ein wannenförmiges Fahrzeugbauteil, im Hinblick auf jeweilige Stabilitätsanforderungen vollständig oder teilweise mit Aluminiumschaum auszufüllen.

Zum Stand der Technik (WO 02/058926 A1) gehört ferner eine für Schienenfahrzeuge geeignete Sandwich-Struktur, die zwei dünnwandige Außenplatten aus beispielsweise Stahl oder Aluminium und eine zwischen diesen Platten eingeklebte Kernschicht aus beispielsweise Metallschaum aufweist.

Der Erfindung liegt die Aufgabe zugrunde, eine Bodengruppe der gattungsgemäßen Art unter Beseitigung der vorgenannten Nachteile auf möglichst einfache und von den Kosten her günstige Weise so auszubilden, dass vor allem eine hohe Maßgenauigkeit, eine den Beanspruchungen angepasste Festigkeit bei niedrigem Gewicht und eine weitgehende Integration von Teilen erreichbar sind. Außerdem sollen eine Austauschbarkeit mit bisherigen Bodengruppen möglich und Forderungen hinsichtlich einer ausreichenden Schall-, Vibrations- und Wärmedämmung erfüllt sein.

Diese Aufgabe wird erfindungsgemäß dadurch gelöst, dass die Bodengruppe mit ihrer Bodenplatte und ihrem für Radkästen vorgesehenen Bereich aus einer einteiligen aluminiumplattierten Stahlschaum-Verbundstruktur besteht.

Vorteilhafte Ausgestaltungen der Erfindung sind in den Unteransprüchen angegeben.

Im Gegensatz zu bisherigen Bodengruppen, die insbesondere aus zusammengeschweißten Aluminiumblechen bestehen, kann durch einen aluminiumplattierten Kern aus Stahlschaum für die tragenden Hauptbestandteile eine Bodengruppe geschaffen werden, welche die üblichen Lastfälle nach VDV 152 erfüllt und auch darüber hinausgehende Beanspruchungen erträgt sowie im übrigen die Nachteile der bisherigen Bodengruppen-Konstruktionen vermeidet. Die Bodengruppe nach der Erfindung kann weiter günstig die bisherigen Konstruktionen ohne zusätzliche Nacharbeit substituieren.

Vorteilhafterweise wird die Bodengruppe aus Grossteilen gebildet. Die einzelnen Grossteile werden aus Stahlschaum durch Schmelz- oder Sinterprozesse in adäquaten Formen hergestellt. Damit ergeben sich günstige Möglichkeiten zur mikro- und makrogeometrischen Gestaltung. Der entstehende Schaumkern wird mit Aluminiumblechen gegebenenfalls unter Verwendung von metallischen Zwischenschichten plattiert. Die Aluminiumbleche können zur Erzielung von bestimmten Eigenschaften - Dehnung, Vibrationsdämpfung, Korrosionsschutz - aus verschiedenen Legierungen bestehen.

Der Stahlschaum ist hinsichtlich seiner inneren Struktur so beschaffen, dass er die aufgrund der einzelnen Lastfälle auftretenden Kräfte sicher aufnehmen kann. Das wird gegebenenfalls durch unterschiedliche Zellgrößen und Zellstrukturen, Dicken, Dickengradienten, Ausrundungen oder Schäumungsgrade erreicht. Die Anpassbarkeit an die unterschiedlichen Belastungen und an unterschiedliche Krafteinleitungspunkte ist weiterhin durch die Kombination von verschiedenartigen Stahlschaumschichten möglich; mittels ein- oder mehrdimensionaler Variation der Schaumdichte ist eine Einstellung verschiedener Eigenschaften, beispielsweise hinsichtlich der Festigkeit, der Dichte, der Dämpfung und der Umformbarkeit denkbar. Auch Schäume mit einem Dichtegradienten sind möglich. Denkbar ist ebenfalls die Integration von Befestigungseinrichtungen für Geräte oder Anbauteile in die Schaumstruktur.

Ein Ausführungsbeispiel der Erfindung ist in der Zeichnung dargestellt und wird nachstehend erläutert. Es zeigen
- Fig. 1: den Grundaufbau einer Bodengruppe aus einem aluminiumplattierten Stahlschaum-Verbundteil,
- Fig. 2: den Schichtaufbau des Verbundteils nach Fig. 1 anhand eines Radkastens im Detail.

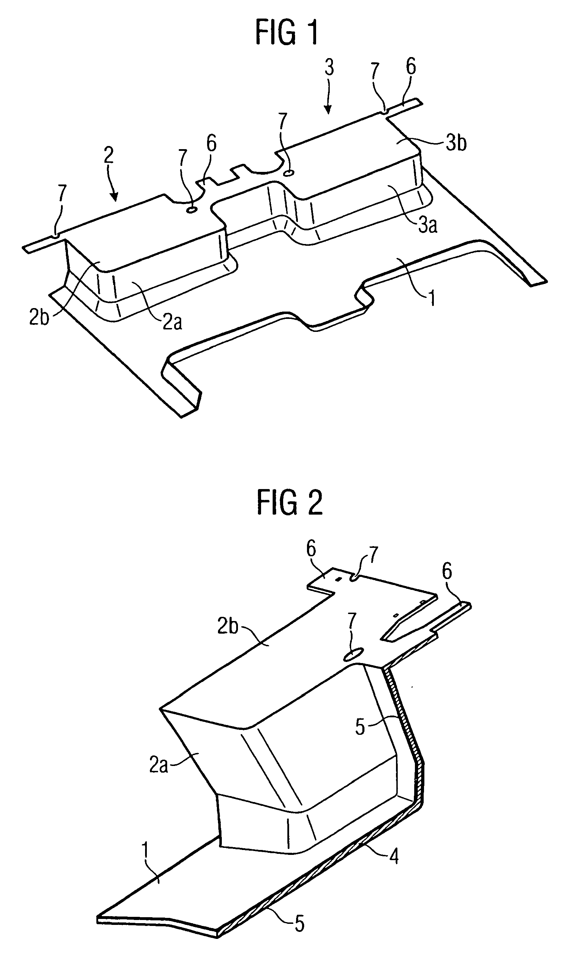

Die Bodengruppe besteht im wesentlichen aus einer Bodenplatte 1 und zwei Radkästen 2, 3 für unterhalb der Bodengruppe angeordnete Räder eines Fahrwerks. Die Radkästen 2, 3 sind jeweils aus Seitenwänden 2a, 3a und einem Deckel 2b, 3b gebildet. Wie die Detailansicht gemäß Fig. 2 zeigt, ist die Bodengruppe aus einer Stahlschaumschicht 4 und jeweiligen Aluminiumblechen 5 als Deckschicht hergestellt. Die Aluminiumbleche 5, die eine Dicke im Bereich von 0,8 mm bis 1,2 mm aufweisen können, verschließen die offene Struktur des Stahlschaums. Im Übergangsbereich der Bodengruppe in den Wagenkastenaufbau sind Füge- bzw. Befestigungsansätze 6 vorgesehen, die aus reinem Aluminium bestehen. An den mit dem Bezugszeichen 7 markierten Stellen sind Gewindebuchsen für Befestigungsschrauben in der Verbundstruktur der Bodengruppe verankert.

Speziell hoch beanspruchte Bereiche der Bodengruppe können kraftflussgerecht mit relativ geringen Wandstärken gestaltet werden. Bei einer Dichte der aluminiumplattierten Stahlschaum-Verbundstruktur von ca. 2,8 g/cm³ ergibt sich ein relativ geringes Gewicht der Bodengruppe.

## Patentansprüche

1. Bodengruppe eines Wagenkastens, insbesondere für Schienenfahrzeuge, mit zumindest einer Bodenplatte (1) und einem für Radkästen (2, 3) vorgesehenen Bereich, wobei die Bodenplatte (1) aus einer einteiligen plattierten Metallschaum-Verbundstruktur gebildet ist,
**dadurch gekennzeichnet, dass** die Bodengruppe mit ihrer Bodenplatte (1) und ihrem für Radkästen (2, 3) vorgesehenen Bereich aus einer einteiligen aluminiumplattierten Stahlschaum-Verbundstruktur (4, 5) besteht.

2. Bodengruppe nach Anspruch 1, **dadurch gekennzeichnet, dass** der Stahlschaumkern vor dem Plattieren mit Aluminiumblech (5) mit weiteren metallischen Zwischenschichten versehen wird.

3. Bodengruppe nach Anspruch 1, **dadurch gekennzeichnet, dass** in der Stahlschaum-Verbundstruktur (4, 5) Fügeelemente bzw. Befestigungselemente integriert sind.

## Claims

1. Floor assembly of a coach body, in particular for rail vehicles, having at least one floor pan (1) and a region provided for wheel housings (2, 3), the floor pan (1) being formed from a one-piece, aluminium-plated metal foam composite structure (4, 5), **characterized in that** the floor assembly, with its floor pan (1) and its region provided for wheel housings (2, 3), consists of a one-piece, aluminium-plated steel foam composite structure (4, 5).

2. Floor assembly according to Claim 1, **characterized in that**, prior to the plating with aluminium plate (5), the steel foam core is provided with further metallic intermediate layers.

3. Floor assembly according to Claim 1, **characterized in that** joining elements or fastening elements are integrated in the steel foam composite structure (4, 5).

## Revendications

1. Plancher d'une caisse, en particulier pour des véhicules sur rails, comportant au moins une plaque de fond (1) et une zone prévue pour des couvre-roue (2, 3), la plaque de fond (1) étant formée d'une structure composite de mousse de métal plaquée et en une seule partie, **caractérisé en ce que** le plancher ainsi que sa plaque de fond (1) et sa zone prévue pour des couvre-roue (2, 3) consiste en une structure composite en mousse d'acier plaquée en aluminium et en une seule partie.

2. Plancher selon la revendication 1, **caractérisé en ce que**, avant de le plaquer à l'aide d'une tôle d'aluminium (5), le noyau en mousse d'acier est pourvu d'autres couches intermédiaires métalliques.

3. Plancher selon la revendication 1, **caractérisé en ce que** des éléments de jonction ou des éléments de fixation sont intégrés dans la structure composite (4, 5) de mousse d'acier.
